(19) Europäisches Patentamt
European Patent Office
Office européen des brevets

(11) Publication number: **0 147 938**
**A2**

(12) # EUROPEAN PATENT APPLICATION

(21) Application number: 84307863.5

(22) Date of filing: 14.11.84

(51) Int. Cl.[4]: C 09 B 29/085
D 06 P 1/18

(30) Priority: 08.12.83 GB 8332785

(43) Date of publication of application: 10.07.85 Bulletin 85/28

(84) Designated Contracting States: CH DE FR GB IT LI

(71) Applicant: IMPERIAL CHEMICAL INDUSTRIES PLC
Imperial Chemical House Millbank
London SW1P 3JF(GB)

(72) Inventor: Boyd, Violet
70 Ashbourne Grove
Whitefield Manchester(GB)

(72) Inventor: Fishwick, Brian Ribbons
69 Oakdale Drive Heald Green
Cheadle Cheshire(GB)

(72) Inventor: Korn, Stewart Reid
38 Montrose Way
Dunblane FK15 9JL Scotland(GB)

(72) Inventor: Parton, Brian
11 Cleadon Drive South
Bury BL8 1EJ, Greater Manchester(GB)

(74) Representative: Houghton, Malcolm John et al,
Imperial Chemical Industries PLC Legal Department: Patents PO Box 6
Welwyn Garden City Herts, AL7 1HD(GB)

(54) **Disperse dyestuffs.**

(57) Disperse azo dyestuffs are obtained by coupling diazotised meta-nitroanilines onto 3-acylamino-N,N-di-(alkoxycarbonylalkyl) aniline coupling components. The dyes are especially useful for direct printing of polyester, for continuous dyeing of polyester cotton blends and as a yellowing component for black, navy and other mixtures for printing where sublimation fastness is important.

The dyes, which give red to yellow shades, exhibit good properties with respect to multifibre printing and non-staining properties after wet treatments and good stannous chloride dischargeability.

EP 0 147 938 A2

Croydon Printing Company Ltd

DISPERSE DYESTUFFS

This invention relates to novel disperse dyestuffs of the benzene-azo-benzene series and to their use for the colouration of synthetic textile materials.

According to the present invention there are provided disperse dyestuffs of the formula (I):

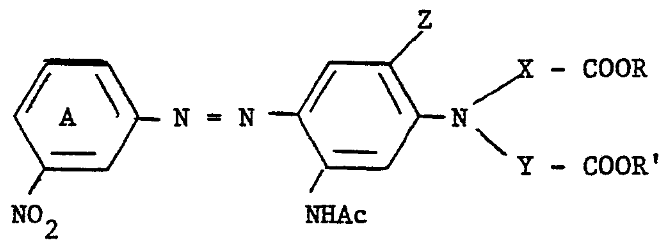

(I)

in which Ac is acyl, Z is hydrogen or lower alkoxy, X and Y, which are the same or different are lower alkylene, R and R', which are the same or different are lower alkyl and the ring A is optionally further substituted.

The acyl group Ac is the residue of an optionally substituted aliphatic carboxylic acid such as formic, acetic, propionic, butyric, chloracetic, trichloracetic, trifluoracetic, methoxyacetic, acetoxyacetic or beta(methoxycarbonyl)propionic acid. Preferably it is acetyl.

If Z is lower alkoxy, it may be, for example, methoxy, ethoxy, propoxy or butoxy.

The lower alkylene groups X and Y, which may be the same or different, may be, for example, methylene, propylene or butylene.

The lower alkyl groups R and R', which may be the same or different, may be, for example, methyl, ethyl, propyl or butyl.

The terms "lower alkyl", "lower alkoxy" and "lower alkylene" are used to describe alkyl, alkoxy and alkylene groups containing from 1-4 carbon atoms and which may carry other substituents.

The ring A may be further substituted with any groups which do not make the dyestuff water-soluble. These include nitro, cyano, halogen, lower alkyl, lower alkoxy and lower alkoxycarbonyl.

Of particular interest are dyestuffs in which ring A has the formula (II):

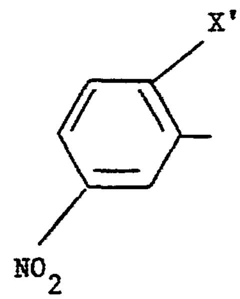

(II)

in which X' is hydrogen, cyano, halogen, especially chlorine but also bromine, lower alkyl, lower alkoxy especially methoxy, or lower alkoxycarbonyl and more particularly the dyestuffs in which diazotised 3-nitroaniline or 5-nitroanisidine are coupled onto 3-acetylamino-N,N-di(beta-methoxycarbonylethyl)aniline.

In another aspect of the present invention there is provided a process for the manufacture of the disperse dyestuffs hereinbefore defined which comprises

(a) coupling a diazotised amine of the formula (III):

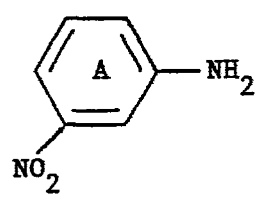

(III)

with a coupling component of the formula (IV):

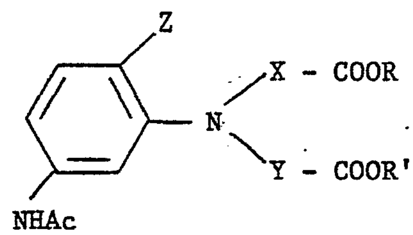

(IV)

(b) coupling a diazotised amine (III) with a coupling component of the formula (V):

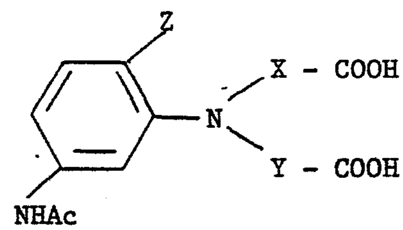

(V)

followed by esterification toconvert the -COOH groups to -COOR, or

(c) coupling a diazotised amine of the formula (VI):

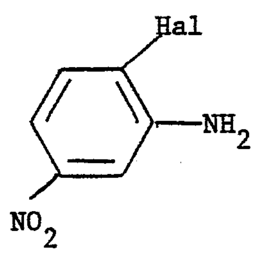

(VI)

with a coupling component (IV) followed by replacement of Hal by CN or $NO_2$, the meanings of Ac, X, Y, Z, R, R' and the ring A being as previously stated and the meaning of Hal being halogen.

The diazotisable amines used in the process of the invention are, in general, known compounds. Suitable amines include:

3,5-dinitroaniline

3-nitro-4-cyanoaniline
2-chloro-5-nitroaniline
2-methyl-5-nitroaniline
2-methoxycarbonyl-5-nitroaniline
3-nitro-5-methoxycarbonylaniline.

In particular there are mentioned meta-nitroaniline which can be obtained by partial reduction of meta-dinitrobenzene and 5-nitro-o-anisidine which can be obtained by partial reduction of 2,4-dinitroanisole or nitration of o-anisidine.

Coupling components used in the process of the invention may be obtained in several ways, for example,

(i) by condensing a primary amine of the formula (VII)

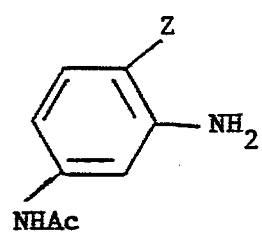

(VII)

with two molecular proportions of an omega-halogeno, for example, an omega-chloro or omego-bromo, compound of the formula:

Halogen-XCOOR or

(ii) by condensing a primary amine of the above formula with two molecular proportions of an alpha,beta-unsaturated acid for example acrylic acid and esterifying as necessary the dicarboxylic acid so obtained.

(iii) Coupling components, in which X and Y and/or R and R' are different, may be obtained by condensing a primary amine of the above formula with an ester of an unsaturated acid for example methylacrylate and subsequently condensing the secondary amine so

obtained with an omega-halogeno compound of the formula indicated above. Alternatively the secondary amine may be condensed with an alpha,beta-unsaturated acid and the product subsequently esterified, as necessary.

(iv) Many of the coupling components may be obtained by condensation of an appropriately substituted meta-nitroaniline with two molecular proportions of an alpha,beta-unsaturated carboxylic acid for example acrylic acid, esterification, as necessary, of the dicarboxylic acid so obtained and subsequent reduction of the nitro group and acylation of the resulting amino compound.

(v) Coupling components in which Z is not hydrogen may be obtained by nitration of a compound of the formula (VIII):

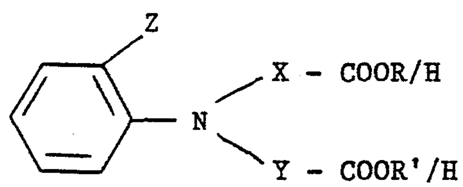

(VIII)

followed by reduction and subsequent acylation of the resulting amine.

The process of the invention may conveniently be carried out by mixing a solution or suspension of the diazotised amine in a mineral acid, such as sulphuric or hydrochloric acid, with a solution of the coupling component in a suitable solvent, or mixture of solvents, for example a mixture of water, hydrochloric acid and acetone, at a temperature of, for example, between 0 and 20°C and stirring the mixture until coupling is complete. The dyestuff which is almost insoluble in water may then be filtered off, washed and dried.

The dyestuffs of the present invention are valuable for colouring synthetic textile materials, in particular cellulose acetate and triacetate textile materials and especially aromatic polyester (such as polyethylene terephthalate) textile materials. In yet a further aspect of the invention we provide, therefore, a

process for the colouration of these textile materials which comprises applying thereto a disperse dyestuff as hereinbefore defined. The materials can be in the form of filaments, fibres or woven or knitted materials.

The dyestuffs can be applied to synthetic textile materials optionally in conjunction with other disperse dyestuffs by methods which are conventionally employed in applying disperse dyes to such textile materials. Thus the dyestuffs in the form of aqueous dispersions can be applied by batchwise or continuous dyeing or by padding or printing processes using additives which are conventionally used in carrying out such processes and heating to fix the dyestuffs on the material. At the conclusion of the said processes the coloured textile materials are usually rinsed in water and then preferably given a clearing treatment in order to remove loose dyestuff from the surfaces of the textile material. Whilst this clearing treatment can comprise immersion in a warm aqueous alkaline solution of sodium hydrosulphite, it is found that the presence of the sodium hydrosulphite is not essential and that treatment for a few minutes in a hot aqueous alkaline solution having a pH of at least 8, preferably between 10 and 13.5, for example in a hot aqueous solution of sodium carbonate or sodium hydroxide, may adequately remove loose dyestuff.

The dyestuffs of the present invention are also valuable for the colouration of blends of aromatic polyester fibres and cellulose fibres in conjunction with a reactive dyestuff for the cellulose fibres using any of the conventional dyeing, padding or printing processes already referred to. The coloured aromatic polyester cellulose unions so obtained are rinsed in water and may then be given a hot alkaline clearing treatment at a pH of at least 8 as described above. In the case of printed polyester cellulose unions this alkaline clearing treatment leaves any white unprinted areas essentially free from staining by unfixed disperse dyestuff.

The dyestuffs are also useful for discharge printing of synthetic textile materials by applying to the material a padding

liquor containing the dyestuff and an alkaline or stannous chloride print paste, subsequently fixing the dye and finally washing.

In summary, the dyes are especially useful for direct printing of polyester triacetate and acetate, for alkaline or stannous chloride discharge printing on polyester, for continuous dyeing of polyester cotton blends and as a yellowing component for black, navy and other mixtures for printing where sublimation fastness is important.

The dyes, which give red to yellow shades, exhibit good properties with respect to multifibre printing and non-staining properties after wet treatments and good stannous chloride dischargeability.

The invention is illustrated by the following Examples 1 to 29 in which percentages are by weight.

Example 1

3-Nitroaniline (5.52g) were dissolved by warming in a mixture of water (10g) and 36% hydrochloric acid (30g). After cooling 2N sodium nitrite (24g) were added at 0 to 5°C and the mixture stirred for 1 hour at this temperature. N,N-bis(beta-carbomethoxyethyl)-meta-aminoacetanilide (10.56g) was stirred with 50% aqueous acetone (100g) and the above diazo component added at 0 to 5°C. Sodium acetate was then added until the pH was between 5 and 6 and the mixture then stirred for 16 hours. The product was filtered off, washed with water, dried at 60°C and finally recrystallised from butanol to give an orange solid, m.p. 97°C, $\lambda max$ (vis.) 466 nm, $p^+$ (mass spectrum) 471.

The dyestuff was converted into an aqueous dispersion which was incorporated into a print paste and applied to wet treatments and dry heat treatments.

Examples 2 to 8

In these Examples, dyestuffs of formula (A) prepared by a method similar to that described in Example 1, are listed in the following table, together with spectroscopic data and shades on polyethylene terephthalate.

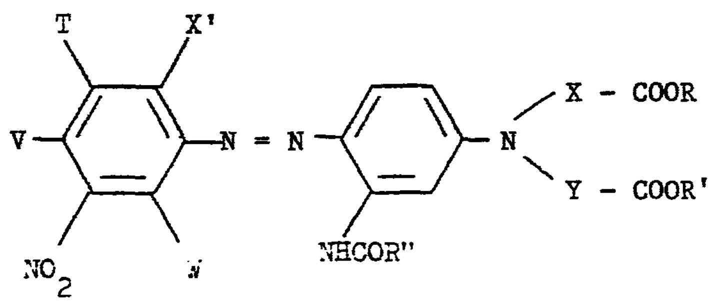

(A)

TABLE

| Example No. | X' | T | V | W | X | Y | R | R' | R'' | λmax nm | 'p+ | Shade on Polyethylene Terephthalate |
|---|---|---|---|---|---|---|---|---|---|---|---|---|
| 2 | H | $NO_2$ | H | H | $-CH_2CH_2-$ | $-CH_2CH_2-$ | $-CH_3$ | $-CH_3$ | $-CH_3$ | 472 | 516 | Orange |
| 3 | H | H | CN | H | " | " | " | " | " | 495 | 496 | Red |
| 4 | $OCH_3$ | H | H | H | " | " | " | " | " | 462 | 501 | Reddish-yellow |
| 5 | Cl | H | H | H | " | " | " | " | " | 480 | 506 | Orange |
| 6 | $CH_3$ | H | H | H | " | " | " | " | " | 460 | 485 | Golden-yellow |
| 7 | 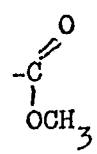 | H | H | H | " | " | " | " | " | 468 | 529 | Orange |
| 8 | H | 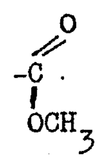 | H | H | " | " | " | " | " | 468 | 529 | Orange |

Examples 9-29

In these Examples, dyestuffs of formula (B) prepared by methods similar to that described in Example 1, are listed in the following table, together with spectroscopic data and shades on polyethylene terephthalate.

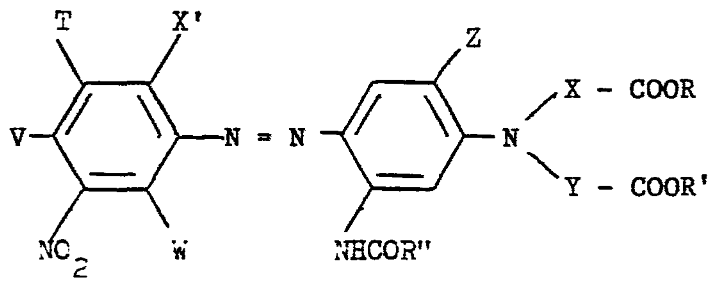

(B)

TABLE II

| Example No. | Z | X' | T | V | W | X | Y | R | R' | R'' | λmax nm | $p^+$ | Shade on Polyethylene Terephthalate |
|---|---|---|---|---|---|---|---|---|---|---|---|---|---|
| 9 | H | H | H | H | H | $-CH_2CH_2CH_2-$ | $-CH_2CH_2CH_2-$ | $-CH_3$ | $-CH_3$ | $-CH_3$ | 475 | 499 | Orange |
| 10 | H | H | H | H | H | $-CH_2CH_2-$ | $-CH_2CH_2-$ | $-C_2H_5$ | $-C_2H_5$ | $-CH_3$ | 466 | 499 | Reddish-yellow |
| 11 | H | $OCH_3$ | H | H | H | $-CH_2CH_2-$ | $-CH_2CH_2-$ | $-C_2H_5$ | $-C_2H_5$ | $-CH_3$ | 462 | 490 | Reddish-yellow |
| 12 | H | Cl | H | H | H | $-CH_2CH_2-$ | $-CH_2CH_2-$ | $-C_2H_5$ | $-C_2H_5$ | $-CH_3$ | 480 | 534 | Orange |
| 13 | $OCH_3$ | H | H | H | H | $-CH_2CH_2-$ | $-CH_2CH_2-$ | $-CH_3$ | $-CH_3$ | $-CH_3$ | 512 | 501 | Red |
| 14 | H | H | H | H | H | $-CH_2CH_2-$ | $-CH_2CH_2-$ | $-CH_3$ | $-CH_3$ | $-CH\genfrac{}{}{0pt}{}{CH_3}{CH_3}$ | 465 | 499 | Reddish-yellow |
| 15 | $OCH_3$ | H | $NO_2$ | H | H | $-CH_2CH_2-$ | $-CH_2CH_2-$ | $-CH_3$ | $-CH_3$ | $-CH_3$ | 518 | 546 | Red |
| 16 | H | $OCH_3$ | H | H | H | $-CH_2CH_2CH_2-$ | $-CH_2CH_2CH_2-$ | $-CH_3$ | $-CH_3$ | $-CH_3$ | 472 | 490 | Orange |
| 17 | H | $CH_3$ | H | H | H | $-CH_2CH_2-$ | $-CH_2CH_2-$ | $-C_2H_5$ | $-C_2H_5$ | $-CH_3$ | 460 | 513 | Golden-yellow |
| 18 | H | H | H | H | H | $-CH_2CH_2-$ | $-CH_2CH_2-$ | $-C_2H_5$ | $-C_2H_5$ | $-CH\genfrac{}{}{0pt}{}{CH_3}{CH_3}$ | 465 | 527 | Reddish-yellow |

TABLE II (Continued)

| Example No. | Z | X' | T | V | W | X | Y | R | R' | R'' | λmax nm | p⁺ | Shade on Polyethylene Terephthalate |
|---|---|---|---|---|---|---|---|---|---|---|---|---|---|
| 19 | H | H | Cl | H | Cl | $-CH_2CH_2-$ | $-CH_2CH_2-$ | $-CH_3$ | $-CH_3$ | $-CH_3$ | 485 | 541 | Scarlet |
| 20 | H | CN | H | H | H | $-CH_2CH_2-$ | $-CH_2CH_2-$ | $-CH_3$ | $-CH_3$ | $-CH_3$ | 497 | 496 | Red |
| 21 | H | H | H | $COOCH_3$ | H | $-CH_2CH_2-$ | $-CH_2CH_2-$ | $-CH_3$ | $-CH_3$ | $-CH_3$ | 480 | 529 | Orange |
| 22 | H | H | CN | H | H | $-CH_2CH_2-$ | $-CH_2CH_2-$ | $-CH_3$ | $-CH_3$ | $-CH_3$ | 475 | 496 | Reddish-yellow |
| 23 | H | Cl | Cl | H | H | $-CH_2CH_2-$ | $-CH_2CH_2-$ | $-CH_3$ | $-CH_3$ | $-CH_3$ | 484 | 541 | Orange |
| 24 | H | H | Cl | H | Cl | $-CH_2CH_2CH_2-$ | $-CH_2CH_2CH_2-$ | $-CH_3$ | $-CH_3$ | $-CH_3$ | 492 | 569 | Red |
| 25 | H | CN | Cl | H | H | $-CH_2CH_2-$ | $-CH_2CH_2-$ | $-CH_3$ | $-CH_3$ | $-CH_3$ | 500 | 531 | Red |
| 26 | $OCH_3$ | Cl | H | H | H | $-CH_2CH_2-$ | $-CH_2CH_2-$ | $-CH_3$ | $-CH_3$ | $-CH_3$ | 520 | 536 | Red |
| 27 | H | H | Cl | H | Cl | $-CH_2CH_2-$ | $-CH_2CH_2-$ | $-C_2H_5$ | $-C_2H_5$ | $-CH_3$ | 486 | 569 | Scarlet |
| 28 | $OCH_3$ | Cl | H | H | H | $-CH_2CH_2-$ | $-CH_2CH_2-$ | $-CH_3$ | $-CH_3$ | $-C_2H_5$ | 520 | 540 | Red |
| 29 | H | CN | Cl | H | H | $-CH_2CH_2-$ | $-CH_2CH_2-$ | $-C_2H_5$ | $-C_2H_5$ | $-CH_3$ | 500 | 559 | Red |

CLAIMS

1. Disperse dyestuffs of the formula (I):

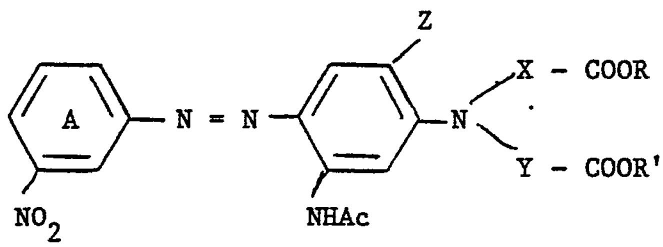

(I)

in which Ac is acyl, Z is hydrogen or lower alkoxy, X and Y, which are the same or different are lower alkylene, R and R', which are the same or different are lower alkyl and the ring A is optionally further substituted.

2. A dyestuff according to claim 1 in which the ring A has the formula (II):

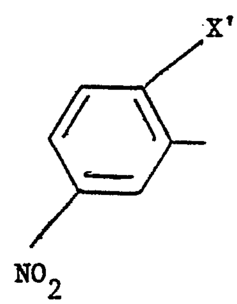

(II)

in which X' is hydrogen, cyano, halogen, lower alkyl, lower alkoxy or lower alkoxycarbonyl.

3. A process for the manufacture of the disperse dyestuffs according to claim 1 which comprises

(a) coupling a diazotised amine of the formula (III):

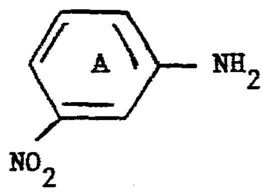

(III)

with a coupling component of the formula (IV):

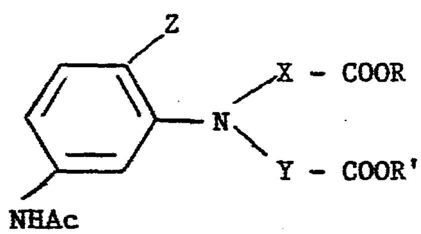

(IV)

(b) coupling a diazotised amine (III) with a coupling component of the formula (V):

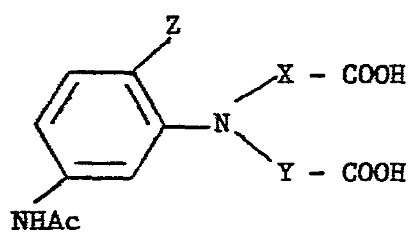

(V)

followed by esterification toconvert the -COOH groups to -COOR,

or

(c) coupling a diazotised amine of the formula (VI):

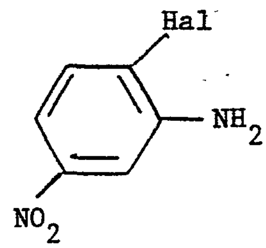

(VI)

with a coupling component (IV) followed by replacement of Hal by CN or $NO_2$,

the meanings of Ac, X, Y, Z, R, R' and the ring A being as stated in claim 1 and the meaning of Hal being halogen.

4. A process for the colouration of a synthetic textile material which comprises applying thereto a disperse dyestuff according to claim 1.

5. A process according to claim 4 in which the synthetic textile material is made of an aromatic polyester.

MJH/BH

9.11.84.